# EUROPEAN PATENT SPECIFICATION

(11) **EP 2 046 115 B1**
(45) Date of publication and mention of the grant of the patent: **20.05.2015**
(21) Application number: 07810820.6
(22) Date of filing: 26.07.2007
(51) Int. Cl.: A01N 25/14

(54) **HERBICIDAL COMPOSITIONS**
HERBIZIDZUSAMMENSETZUNGEN
COMPOSITIONS HERBICIDES

(30) Priority: 26.07.2006 US 833322 P
(43) Date of publication of application: 15.04.2009
(73) Proprietor: Dow AgroSciences, LLC, Indianapolis, Indiana 46268-1054 (US)
(72) Inventor: JENSEN, Jeffrey, Lee, Brownsburg, Indiana 46112 (US); GRANDCOLAS, Didier, H., 67716 Reichstett (FR); FOSTER, Neil, A., 67460 Souffelweyersheim (FR)
(74) Representative: Weickmann & Weickmann
(86) International application number: PCT/US2007/016837
(87) International publication number: WO 2008/013904

(56) References cited:
- WO-A-2005/048706
- GB-A- 2 346 086

## Description

### CROSS-REFERENCE TO RELATED APPLICATION

This application claim priority from provisional application 60/833,322 filed in the United States Patent Office on July 26, 2006.

### BACKGROUND OF THE INVENTION

Cloquintocet-mexyl has the following structural formula. 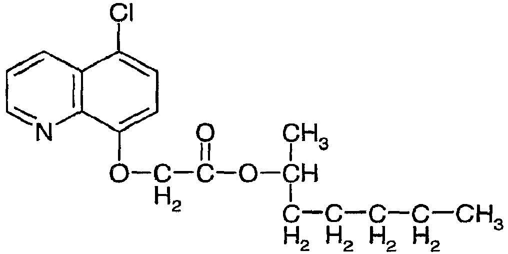 It is known to function as a herbicide safener. In general, a herbicide safener is a compound that reduces the effects of the herbicide when applied to crops.

It is desirable to form water-dispersible granules comprising herbicides. This is because such granules are easy to use, pour like a liquid after mixing with water, and generate little or no dust during the application of the water-dispersed granules. However, when Cloquintocet-mexyl comes into contact with water it readily converts to its hydrate which is predisposed to form large crystals that hinders its sprayability and subsequently its ability to function as a herbicide safener. This invention provides a solution to this problem by mitigating the crystal growth of the Cloquintocet-mexyl hydrate.

### SUMMARY OF THE INVENTION

A herbicidal composition comprising: at least one herbicide; at least one carrier; at least one polycarboxylate; at least one taurate; at least one lignosulfate; at least one urea-formaldehyde polymer condensate; and Cloquintocet-mexyl.

A process comprising mixing: at least one herbicide; at least one carrier; at least one polycarboxylate; at least one taurate; at least one lignosulfate; at least one urea-formaldehyde polymer condensate; and Cloquintocet-mexyl.

A herbicidal composition produced by the process comprising mixing: at least one herbicide; at least one carrier; at least one polycarboxylate; at least one taurate; at least one lignosulfate; at least one urea-formaldehyde polymer condensate; and Cloquintocet-mexyl.

A process for controlling weeds or grasses or both in crops of useful plants, said process comprising treating said crops or the area where said crops are to be planted with an effective amount of a herbicidal composition comprising: at least one herbicide; at least one carrier; at least one polycarboxylate; at least one taurate; at least one lignosulfate; at least one urea-formaldehyde polymer condensate; and Cloquintocet-mexyl.

A process for controlling weeds or grasses or both in crops of useful plants said process comprising treating said crops or the area where said crops are to be planted with an effective amount of a herbicidal composition produced by the process comprising mixing: at least one herbicide; at least one carrier; at least one polycarboxylate; at least one taurate; at least one lignosulfate; at least one urea-formaldehyde polymer condensate; and Cloquintocet-mexyl

### DETAILED DESCRIPTION OF THE INVENTION

Any herbicide can be used in this invention. Suitable examples of herbicides that can be used are:
amide herbicides such as allidochlor, beflubutamid, benzadox, benzipram, bromobutide, cafenstrole, CDEA, chlorthiamid, cyprazole, dimethenamid, dimethenamid-P, diphenamid, epronaz, etnipromid, fentrazamide, flupoxam, fomesafen, halosafen, isocarbamid, isoxaben, napropamide, naptalam, pethoxamid, propyzamide, quinonamid and tebutam;
anilide herbicides such as chloranocryl, cisanilide, clomeprop, cypromid, diflufenican, etobenzanid, fenasulam, flufenacet, flufenican, mefenacet, mefluidide, metamifop, monalide, naproanilide, pentanochlor, picolinafen and propanil;
arylalanine herbicides such as benzoylprop, flamprop and flamprop-M;
chloroacetanilide herbicides such as acetochlor, alachlor, butachlor, butenachlor, delachlor, diethatyl, dimethachlor, metazachlor, metolachlor, S-metolachlor, pretilachlor, propachlor, propisochlor, prynachlor, terbuchlor, thenylchlor and xylachlor;
sulfonanilide herbicides such as benzofluor, perfluidone, pyrimisulfan and profluazol;
sulfonamide herbicides such as asulam, carbasulam, fenasulam and oryzalin;
antibiotic herbicides such as bilanafos;
benzoic acid herbicides such as chloramben, dicamba, 2,3,6-TBA and tricamba;
pyrimidinyloxybenzoic acid herbicides such as bispyribac and pyriminobac;
pyrimidinylthiobenzoic acid herbicides such as pyrithiobac;
phthalic acid herbicides such as chlorthal;
picolinic acid herbicides such as aminopyralid, clopyralid and picloram;
quinolinecarboxylic acid herbicides such as quinclorac and quinmerac;
arsenical herbicides such as cacodylic acid, CMA, DSMA, hexaflurate, MAA, MAMA, MSMA, potassium arsenite and sodium arsenite;
benzoylcyclohexanedione herbicides such as mesotrione, sulcotrione and tembotrione;
benzofuranyl alkylsulfonate herbicides such as benfuresate and ethofumesate;
carbamate herbicides such as asulam, carboxazole chlorprocarb, dichlormate, fenasulam, karbutilate and terbucarb;
carbanilate herbicides such as barban, BCPC, carbasulam, carbetamide, CEPC, chlorbufam, chlorpropham, CPPC, desmedipham, phenisopham, phenmedipham, phenmedipham-ethyl, propham and swep;
cyclohexene oxime herbicides such as alloxydim, butroxydim, clethodim, cloproxydim, cycloxydim, profoxydim, sethoxydim, tepraloxydim and tralkoxydim;
cyclopropylisoxazole herbicides such as isoxachlortole and isoxaflutole;
dicarboximide herbicides such as benzfendizone, cinidon-ethyl, flumezin, flumiclorac, flumioxazin and flumipropyn;
dinitroaniline herbicides such as benfluralin, butralin, dinitramine, ethalfluralin, fluchloralin, isopropalin, methalpropalin, nitralin, oryzalin, pendimethalin, prodiamine, profluralin and trifluralin;
dinitrophenol herbicides such as dinofenate, dinoprop, dinosam, dinoseb, dinoterb, DNOC, etinofen and medinoterb;
diphenyl ether herbicides such as ethoxyfen;
nitrophenyl ether herbicides such as acifluorfen, aclonifen, bifenox, chlomethoxyfen, chlornitrofen, etnipromid, fluorodifen, fluoroglycofen, fluoronitrofen, fomesafen, furyloxyfen, halosafen, lactofen, nitrofen, nitrofluorfen and oxyfluorfen;
dithiocarbamate herbicides such as dazomet and metam;
halogenated aliphatic herbicides such as alorac, chloropon, dalapon, flupropanate, hexachloroacetone, iodomethane, methyl bromide, monochloroacetic acid, SMA and TCA;
imidazolinone herbicides such as imazamethabenz, imazamox, imazapic, imazapyr, imazaquin and imazethapyr;
inorganic herbicides such as ammonium sulfamate, borax, calcium chlorate, copper sulfate, ferrous sulfate, potassium azide, potassium cyanate, sodium azide, sodium chlorate and sulfuric acid;
nitrile herbicides such as bromobonil, bromoxynil, chloroxynil, dichlobenil, iodobonil, ioxynil and pyraclonil;
organophosphorus herbicides such as amiprofos-methyl, anilofos, bensulide, bilanafos, butamifos, 2,4-DEP, DMPA, EBEP, fosamine, glufosinate, glyphosate and piperophos;
phenoxy herbicides such as bromofenoxim, clomeprop, 2,4-DEB, 2,4-DEP, difenopenten, disul, erbon, etnipromid, fenteracol and trifopsime;
phenoxyacetic herbicides such as 4-CPA, 2,4-D, 3,4-DA, MCPA, MCPA-thioethyl and 2,4,5-T;
phenoxybutyric herbicides such as 4-CPB, 2,4-DB, 3,4-DB, MCPB and 2,4,5-TB;
phenoxypropionic herbicides such as cloprop, 4-CPP, dichlorprop, dichlorprop-P, 3,4-DP, fenoprop, mecoprop and mecoprop-P;
aryloxyphenoxypropionic herbicides such as chlorazifop, clodinafop, clofop, cyhalofop, diclofop, fenoxaprop, fenoxaprop-P, fenthiaprop, fluazifop, fluazifop-P, haloxyfop, haloxyfop-P, isoxapyrifop, metamifop, propaquizafop, quizalofop, quizalofop-P and trifop;
phenylenediamine herbicides such as dinitramine and prodiamine;
phenyl pyrazolyl ketone herbicides such as benzofenap, pyrazolynate, pyrasulfotole, pyrazoxyfen and topramezone;
pyrazolylphenyl herbicides such as fluazolate and pyraflufen;
pyridazine herbicides such as credazine, pyridafol and pyridate;
pyridazinone herbicides such as brompyrazon, chloridazon, dimidazon, flufenpyr, metflurazon, norflurazon, oxapyrazon and pydanon;
pyridine herbicides such as aminopyralid, cliodinate, clopyralid, dithiopyr, fluroxypyr, haloxydine, picloram, picolinafen, pyriclor, thiazopyr and triclopyr;
pyrimidinediamine herbicides such as iprymidam and tioclorim;
quaternary ammonium herbicides such as cyperquat, diethamquat, difenzoquat, diquat, morfamquat and paraquat;
thiocarbamate herbicides such as butylate, cycloate, di-allate, EPTC, esprocarb, ethiolate, isopolinate, methiobencarb, molinate, orbencarb, pebulate, prosulfocarb, pyributicarb, sulfallate, thiobencarb, tiocarbazil, tri-allate and vernolate;
thiocarbonate herbicides such as dimexano, EXD and proxan;
thiourea herbicides such as methiuron; triazine herbicides such as dipropetryn, triaziflam and trihydroxytriazine;
chlorotriazine herbicides such as atrazine, chlorazine, cyanazine, cyprazine, eglinazine, ipazine, mesoprazine, procyazine, proglinazine, propazine, sebuthylazine, simazine, terbuthylazine and trietazine;
methoxytriazine herbicides such as atraton, methometon, prometon, secbumeton, simeton and terbumeton;
methylthiotriazine herbicides such as ametryn, aziprotryne, cyanatryn, desmetryn, dimethametryn, methoprotryne, prometryn, simetryn and terbutryn;
triazinone herbicides such as ametridione, amibuzin, hexazinone, isomethiozin, metamitron and metribuzin;
triazole herbicides such as amitrole, cafenstrole, epronaz and flupoxam;
triazolone herbicides such as amicarbazone, bencarbazone, carfentrazone, flucarbazone, propoxycarbazone, sulfentrazone and thiencarbazone-methyl;
triazolopyrimidine herbicides such as cloransulam, diclosulam, florasulam, flumetsulam, metosulam, penoxsulam and [N-(5,7-dimethoxy-(1,2,4)triazolo[1,5-a]pyrimidin-2-yl)-2-methoxy-4-(trifluoromethyl)]-3-pyridine-sulfonamide;
uracil herbicides such as butafenacil, bromacil, flupropacil, isocil, lenacil and terbacil;
3-phenyluracils;
urea herbicides such as benzthiazuron, cumyluron, cycluron, dichloralurea, diflufenzopyr, isonoruron, isouron, methabenzthiazuron, monisouron and noruron;
phenylurea herbicides such as anisuron, buturon, chlorbromuron, chloreturon, chlorotoluron, chloroxuron, daimuron, difenoxuron, dimefuron, diuron, fenuron, fluometuron, fluothiuron, isoproturon, linuron, methiuron, methyldymron, metobenzuron, metobromuron, metoxuron, monolinuron, monuron, neburon, parafluron, phenobenzuron, siduron, tetrafluron and thidiazuron;
pyrimidinylsulfonylurea herbicides such as amidosulfuron, azimsulfuron, bensulfuron, chlorimuron, cyclosulfamuron, ethoxysulfuron, flazasulfuron, flucetosulfuron, flupyrsulfuron, foramsulfuron, halosulfuron, imazosulfuron, mesosulfuron, nicosulfuron, orthosulfamuron, oxasulfuron, primisulfuron, pyrazosulfuron, rimsulfuron, sulfometuron, sulfosulfuron and trifloxysulfuron;
triazinylsulfonylurea herbicides such as chlorsulfuron, cinosulfuron, ethametsulfuron, iodosulfuron, metsulfuron, prosulfuron, thifensulfuron, triasulfuron, tribenuron, triflusulfuron and tritosulfuron;
thiadiazolylurea herbicides such as buthiuron, ethidimuron, tebuthiuron, thiazafluron and thidiazuron; and
unclassified herbicides such as acrolein, allyl alcohol, azafenidin, benazolin, bentazone, benzobicyclon, buthidazole, calcium cyanamide, cambendichlor, chlorfenac, chlorfenprop, chlorflurazole, chlorflurenol, cinmethylin, clomazone, CPMF, cresol, ortho-dichlorobenzene, dimepiperate, endothal, fluoromidine, fluridone, flurochloridone, flurtamone, fluthiacet, indanofan, methazole, methyl isothiocyanate, nipyraclofen, OCH, oxadiargyl, oxadiazon, oxaziclomefone, pentachlorophenol, pentoxazone, phenylmercury acetate, pinoxaden, prosulfalin, pyribenzoxim, pyriftalid, quinoclamine, rhodethanil, sulglycapin, thidiazimin, tridiphane, trimeturon, tripropindan and tritac.

Additionally, as further examples, herbicides includes the herbicides disclosed in U.S. Patent 6,559,101.

An additional example of a herbicide useful in this invention has the following structural formula.

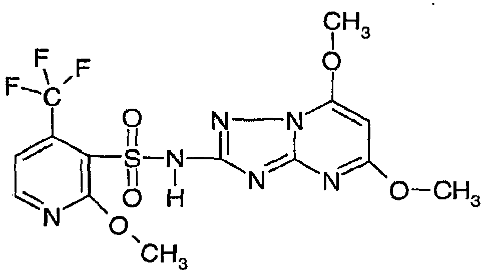

It is also known as N-(5,7-dimethoxy[1,2,4]triazolo[1,5-a]pyrimidin-2-yl)-2-methoxy-4-(trifluoromethyl)-3-pyridinesulfonamide. It has a CAS Registry Number of 422556-08-9. For purposes of this document, it will also be known as "Compound Alpha" (also provisionally approved as pyroxsulam). It is available from Dow AgroSciences LLC.

It is also contemplated that one or more herbicides can be used at the same time in this invention. For example, two herbicides can be in the same granule, or in separate granules. Additionally, agriculturally acceptable salts of these herbicides can also be used.

Solid carriers are calcite, talcum, kaolin, pyrophyllite clay, silica, attapulgus clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, montmorillonite, and attapulgite.

Any suitable polycarboxylate can be used. Suitable polycarboxylates can be polymeric polycarboxylates. For example, the alkali metal salts of polyacrylic or polymethacrylic acid can be used. As an additional example - maleic anhydride, polymer with 2,4,4-trimethyl pentene sodium salt, CAS 37199-81-8 can be used.

Suitable polycarboxylates have a molecular weight of about 500 to about 70,000 g/mol, but this can vary greatly depending on the particular use and environment. The weight ratio of polycarboxylate to Cloquintocet-mexyl is from about 1:100 to about 1:0.001. In another embodiment, the weight ratio of polycarboxylate to Cloquintocet-mexyl is from about 1:10 to about 1:0.1.

Any suitable taurate (alkali salt of a fatty acid amide of taurine or N-methyl taurine) can be used. Suitable taurates can be based on a range of fatty acids, to include lauric, myristic, pentadecanoic, palmitic, margaric, steric, myristoliec, palmitoleic, oleic, linoliec and linolenic acids. For example, a sodium methyl oleoyl taurate, CAS 137-20-2, can be used. The weight ratio of taurate to Cloquntocet-mexyl is from about 1:100 to about 1:0.001. In another embodiment, the weight ratio of taurate to Cloquintocet-mexyl is from about 1:10 to about 1:0.1.

Any suitable lignosulfate can be used. Suitable ligninsulfontes will be alkali metal neutralized and contain between about 0.7 to about 3.3 moles of sulfonation per kg with the placement of the initial sulfonic acid group on either an aliphatic side chain, an aromatic nucleus, or a combination of both. The mean molecular weight of these materials can range from about 1,000 to about 15,000 g/mole. For example, a sodium ligninosulfonte having a molecular weight of about 2,900 g/mole and about 3.3 moles of sulfonation, CAS 8061-51-6, can be used. The weight ratio of lignosulfate to Cloquntocet-mexyl is from about 1:100 to about 1:0.001. In another embodiment, the weight ratio of lignosulfate to Cloquintocet-mexyl is from about 1:10 to about 1:0.01.

A suitable urea-formaldehyde polymer condensate can be used. Suitable urea-formaldehyde polymer condensates will have approximately 0.6% reactive methyol groups and a water content ranging between about 15 and about 70%. For example, a urea-formaldehyde polymer condensate having a water content of about 15% and about 0.6% reactive methyol, CAS 68611-64-3, can be used. The weight ratio of urea-formaldehyde polymer condensate to Cloquntocet-mexyl is from about 1:100 to about 1:0.001. In another embodiment, the weight ratio of urea-formaldehyde polymer condensate to Cloquintocet-mexyl is from about 1:10 to about 1:0.001.

The herbicide(s), carrier(s), polycarboxylate(s), taurate(s), lignosulfonate(s), urea-formaldehyde polymer condensate(s) and the Cloquintocet-mexyl can be mixed together in any conventional manner. However, it is desirable to mix the components together at a temperature below about 40°C. After the mixture is formed it can then be extruded and turned into water-dispersible granules as is known in the art..

Surface-active compounds can also optionally be used in the invention as long as the base components enumerated above are also included. Suitable surface-active compounds are nonionic, cationic, or anionic surfactants having good emulsifying, dispersing, and wetting properties. Surfactants will also be understood as comprising mixtures of surfactants.

Suitable anionic surfactants may be water-soluble soaps, as well as, water-soluble synthetic surface-active compounds.

Suitable soaps are the alkali metal salts, alkaline earth metal salts, ammonium salts, or substituted ammonium salts of higher fatty acids (C₁₀ -C₂₂), e.g. the sodium or potassium salts of oleic, stearic acid, or of natural fatty acid mixtures which can be obtained from coconut oil or tallow oil. Further suitable soaps are also the fatty acid methyl taurin salts.

Synthetic surfactants can be used in this invention such as fatty sulfonates, fatty sulfates, sulfonated benzimidazole derivatives, or alkylarylsulfonates.

The fatty alcohol sulfonates or sulfates, are usually in the form of alkali metal salts, alkaline earth metal salts, ammonium salts, or substituted ammonium salts, and they contain a C₈ -C₂₂ alkyl radical that also includes the alkyl moiety of acyl radicals, e.g. the sodium or calcium salt of ligninsulfonic acid, of dodecylsulfate, or of a mixture of fatty alcohol sulfates obtained from natural fatty acids. These compounds also comprise the salts of sulfated or sulfonated fatty alcohol and ethylene oxide adducts. The sulfonated benz-imidazole derivatives preferably contain 2 sulfonic acid groups and one fatty acid radical containing 8 to 22 carbon atoms. Illustrative examples of alkylarylsulfonates are the sodium, calcium, or triethanolamine salts of dodecylbenzenesulfonic acid, dibutylnaphthalenesulfonic acid, or of a condensate of naphthalenesulfonic acid and formaldehyde.

Corresponding phosphates, typically salts of the phosphoric acid ester of an adduct of p-nonylphenol with 4 to 14 mol of ethylene oxide, or phospholipids, are also suitable.

Nonionic surfactants are preferably polyglycol ether derivatives of aliphatic or cycloaliphatic alcohols, or saturated or unsaturated fatty acids and alkylphenols, said derivatives containing 3 to 30 glycol ether groups and 8 to 20 carbon atoms in the (aliphatic) hydrocarbon moiety and 6 to 18 carbon atoms in the alkyl moiety of the alkylphenols.

Further suitable nonionic surfactants are the water-soluble polyadducts of polyethylene oxide with polypropylene glycol, ethylenediaminopolypropylene glycol and alkylpolypropylene glycol containing 1 to 10 carbon atoms in the alkyl chain, which polyadducts contain 20 to 250 ethylene glycol ether groups and 10 to 100 propylene glycol ether groups. These compounds usually contain 1 to 5 ethylene glycol units per propylene glycol unit.

Illustrative examples of nonionic surfactants are nonylphenol polyethoxylates, polyethoxylated castor oil, polyadducts of polypropylene and polyethylene oxide, tributylphenol polyethoxylate, polyethylene glycol and octylphenol polyethoxylate.

Fatty acid esters of polyoxyethylene sorbitan are also suitable nonionic surfactants, typically polyoxyethylene sorbitan trioleate.

Cationic surfactants are preferably quaternary ammonium salts carrying, as N-substituent, at least one C₈ -C₂₂ alkyl radical and, as further substituents, optionally halogenated lower alkyl, benzyl or hydroxy-lower alkyl radicals. The salts are preferably in the form of halides, methyl sulfates or ethyl sulfates, for example stearyl trimethylammonium chloride or benzyl bis(2-chloroethyl)ethylammonium bromide.

Other surfactants employed in the art of formulation are described, in "Mc Cutcheon's Detergents and Emulsifiers Annual", Mc Publishing Corp., Ridgewood, N.J., 1981, H. Stache, "Tensid-Taschenbuch" (Handbook of Surfactants), Carl Hanser Verlag, Munich/Vienna 1981, and M. and J. Ash, "Encyclopedia of Surfactants", Vol I-III, Chemical Publishing Co., New York, 1980-81.

Other adjuvants commonly utilized in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions can also contain other compatible components, for example, other herbicides, herbicide safeners, plant growth regulants, fungicides, insecticides, and the like and can be formulated with liquid fertilizers or solid, particulate fertilizer carriers such as ammonium nitrate, urea and the like.

The compositions herein can be used in controlling weeds or grasses or both in crops of cultivated plants, typically in crops of cereals, rape, sugar beet, sugar cane, plantations, rice, cotton and, preferably, in crops of maize and soybean. Such compositions are suitable for all standard methods of application used in agriculture, typically preemergence application and postemergence application. The rate of application can vary over a wide range and will depend on the nature of the soil, the type of application (pre- or postemergence), application to the seed furrow; no tillage application etc.), the cultivated plant, the weed to be controlled, the respective prevailing climatic conditions; and on other factors governed by the type of application, time of application and the target crop.

The concentration of the active ingredients in the herbicidal compositions of this invention is generally from about 0.001 to about 98 percent by weight. Concentrations from about 0.01 to about 90 percent by weight are often employed. In compositions designed to be employed as concentrates, the active ingredient is generally present in a concentration from about 5 to about 98 weight percent, preferably about 10 to about 90 weight percent. Such compositions are typically diluted with a carrier, such as water, before application. The diluted compositions usually applied to weeds or the locus of weeds generally contain about 0.001 to about 5 weight percent active ingredient and preferably contain about 0.01 to about 0.5 percent.

The term herbicide is used herein to mean an active ingredient that controls or adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation are meant to include germinant seeds, emerging seedlings and established vegetation.

Herbicidal activity is exhibited by the compounds of the present invention when they are applied directly to the plant or to the locus of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote non selective or selective herbicidal action.

Application rates of about 0.001 to about 1 kg/ha are generally employed in postemergence operations; for preemergence applications, rates of about 0.01 to about 2 kg/ha are generally employed. The higher rates designated generally give non-selective control of a broad variety of undesirable vegetation. The lower rates typically give selective control and, by judicious election of compounds, timing, and rates of application, can be employed in the locus of crops.

### EXAMPLE

The following example is provided to illustrate the invention. The following items where mix together.

| Item | Weight Percent |
|---|---|
| Compound Alpha | 7.5 |
| Kaolin Clay | 35.5 |
| GEROPON T 36 | 5.0 |
| Cloquintocet-mexyl | 7.5 |
| POLYFON F | 15.0 |
| PERGOPAK M | 20.0 |
| GEROPON T 77 | 2.5 |
| Citric Acid | 7.0 |

GEROPON^{®} T 36 (registered trademark of Rhodia Inc.) is sodium polycarboxylate. It has been described as a multipurpose, very high performance dispersing, compatibility, and chelating agent. Its CAS number is 37199-81-8. It is available from Rhodia Inc.

POLYFON^{®} F (registered trademark of MeadWestvaco Corporation) is sodium ligninsulfonate. It has been described as general dispersant. Its CAS number is 8061-51-6. It is available from MeadWestvaco Corporation.

PERGOPAK^{®} M (registered trademark of Albemarle Corporation) is polymethyl urea resin. It has been described as a carrier. Its CAS number is 9011-05-6. It is available from Albemarle Corporation.

GEROPON^{®} T 77 (registered trademark of Rhodia Inc.) is N-methyl oleyl taurate. It has been described as a multipurpose, high performance dispersing, compatibility, and chelating agent. Its CAS number is 137-20-2. It is available from Rhodia Inc.

The items were blended and air milled to form a first mixture. This first mixture was then converted to an extrusion slurry by mixing the first mixture with water to form a second mixture suitable for extrusion. The second mixture was then extruded. The extruded material was then dried to form the finished granules. All of these process steps were done at a temperature below about 40°C in order to prevent the Cloquintocet-mexyl from melting.

These granules were then mixed with water to form an appropriate end use dilution. This dilution, after sitting for twenty-four (24) hours and at a temperature of less than 30°C, was unexpectedly discovered not to undergo crystal growth of the Cloquintocet-mexyl component and the mixture retained its desired characteristics of suspensability, dispensability and chemical stability.

## Claims

1. A herbicidal composition comprising:
a. at least one herbicide;
b. at least one carrier;
c. at least one polycarboxylate;
d. at least one taurate;
e. at least one lignosulfate;
f. at least one urea-formaldehyde polymer condensate; and
g. Cloquintocet-mexyl,
wherein the at least one carrier is selected from calcite, talcum, kaolin, pyrophyllite clay, silica, attapulgus clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, montmorillonite, and attapulgite.

2. A herbicidal composition according to claim 1,
wherein the at least one polycarboxylate is an alkali metal salt of polyacrylic or polymethacrylic acid,
wherein the at least one taurate is an alkali salt of a fatty acid amide of taurine or N-methyltaurine,
wherein the at least one lignosulfate is alkali metal neutralized and contains between 0.7 to 3.3 mols of sulfonation per kg with the placement of the initial sulfonic acid group on either an aliphatic sidechain, an aromatic nucleus, or a combination of both, and
wherein the at least one urea-formaldehyde polymer condensate has approximately 0.6% reactive methyol groups and a water content ranging between 15 and 70%.

3. A composition according to claim 1 wherein at least one herbicide is pyroxsulam.

4. A composition according to claim 3 wherein at least one carrier is kaolin.

5. A composition according to claim 4 wherein at least one polycarboxylate is maleic anhydride, polymer with 2,4,4-trimethyl pentene, sodium salt, also known as CAS 37199-81-8.

6. A composition according to claim 5 wherein at least one taurate is a sodium methyl oleoyl taurate, also known as CAS 137-20-2.

7. A composition according to claim 6 wherein at least one lignosulfate is a sodium ligninosulfonate having a molecular weight of about 2,900 g/mol, also known as CAS 8061-51-6.

8. A composition according to claim 7 wherein at least one urea-formaldehyde polymer condensate is a urea-formaldehyde polymer condensate, also known as CAS 68611-64-3.

9. A process comprising mixing:
a. at least one herbicide;
b. at least one carrier;
c. at least one polycarboxylate; and
d. at least one taurate;
e. at least one lignosulfate;
f. at least one urea-formaldehyde polymer condensate; and
g. Cloquintocet-mexyl,
wherein the at least one carrier is selected from calcite, talcum, kaolin, pyrophyllite clay, silica, attapulgus clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, montmorillonite, and attapulgite.

10. A process for controlling weeds or grasses or both in crops of useful plants said process comprising treating said crops or the area where said crops are to be planted with an effective amount of a herbicidal composition according to claim 1.

11. A herbicidal composition according to claim 1 comprising:
a. pyroxsulam;
b. kaolin;
c. maleic anhydride, polymer with 2,4,4-trimethyl pentene, sodium salt, also known as CAS 37199-81-8;
d. N-methyloleoyl taurate;
e. POLYFON^{®} F also known as CAS 8061-51-6;
f. PERGOPAK^{®} M also known as CAS 9011-05-6; and
g. Cloquintocet-mexyl.

## Patentansprüche

1. Herbizidzusammensetzung, umfassend:
a. mindestens ein Herbizid;
b. mindestens einen Träger;
c. mindestens ein Polycarboxylat;
d. mindestens ein Taurat;
e. mindestens ein Lignosulfat;
f. mindestens ein Harnstoff-Formaldehyd-Polymerkondensat; und
g. Cloquintocet-mexyl,
wobei der mindestens eine Träger ausgewählt ist aus Calcit, Talk, Kaolin, Pyrophyllit-Ton, Kieselerde, Attapulgus-Ton, Kieselguhr, Kreide, Diatomeenerde, Kalk, Calciumcarbonat, Bentonit-Ton, Fuller-Erde, Baumwollsamenhüllen, Weizenmehl, Sojabohnenmehl, Bimsstein, Holzmehl, Walnussschalenmehl, Lignin, Montmorillonit und Attapulgit.

2. Herbizidzusammensetzung nach Anspruch 1,
wobei das mindestens eine Polycarboxylat ein Alkalimetallsalz der Polyacryl- oder Polymethacrylsäure ist,
wobei das mindestens eine Taurat ein Alkalisalz eines Fettsäureamids von Taurin oder N-Methyltaurin ist,
wobei das mindestens eine Lignosulfat alkalimetallneutralisiert ist und zwischen 0,7 bis 3,3 mol Sulfonierung pro kg mittels Platzierung der ursprünglichen Sulfonsäuregruppe an entweder einer aliphatischen Seitenkette, einem aromatischen Kern, oder einer Kombination von beiden enthält, und
wobei das mindestens eine Harnstoff-Formaldehyd-Polymerkondensat etwa 0,6% reaktive Methylolgruppen und einen Wassergehalt, der sich zwischen 15 und 70% bewegt, aufweist.

3. Zusammensetzung nach Anspruch 1, wobei mindestens ein Herbizid Pyroxsulam ist.

4. Zusammensetzung nach Anspruch 3, wobei mindestens ein Träger Kaolin ist.

5. Zusammensetzung nach Anspruch 4, wobei mindestens ein Polycarboxylat Maleinsäureanhydrid, Polymer mit 2,4,4-Trimethylpenten, Natriumsalz, auch bekannt als CAS 37199-81-8, ist.

6. Zusammensetzung nach Anspruch 5, wobei mindestens ein Taurat ein Natriummethyloleoyltaurat, auch bekannt als CAS 137-20-2, ist.

7. Zusammensetzung nach Anspruch 6, wobei mindestens ein Lignosulfat ein Natriumligninosulfonat mit einem Molekulargewicht von etwa 2.900 g/mol, auch bekannt als CAS 8061-51-6, ist.

8. Zusammensetzung nach Anspruch 7, wobei mindestens ein Harnstoff-Formaldehyd-Polymerkondensat ein Harnstoff-Formaldehyd-Polymerkondensat, auch bekannt als CAS 68611-64-3, ist.

9. Verfahren umfassend Mischen von:
a. mindestens einem Herbizid;
b. mindestens einem Träger;
c. mindestens einem Polycarboxylat;
d. mindestens einem Taurat;
e. mindestens einem Lignosulfat;
f. mindestens einem Harnstoff-Formaldehyd-Polymerkondensat; und
g. Cloquintocet-mexyl,
wobei der mindestens eine Träger ausgewählt ist aus Calcit, Talk, Kaolin, Pyrophyllit-Ton, Kieselerde, Attapulgus-Ton, Kieselguhr, Kreide, Diatomeenerde, Kalk, Calciumcarbonat, Bentonit-Ton, Fuller-Erde, Baumwollsamenhüllen, Weizenmehl, Sojabohnenmehl, Bimsstein, Holzmehl, Walnussschalenmehl, Lignin, Montmorillonit und Attapulgit.

10. Verfahren zur Kontrolle von Unkräutern oder Gräsern oder beidem in Kulturen nützlicher Pflanzen, wobei das Verfahren Behandeln der Kulturen oder der Fläche, auf der die Kulturen gepflanzt werden sollen, mit einer wirksamen Menge einer Herbizidzusammensetzung nach Anspruch 1 umfasst.

11. Herbizidzusammensetzung nach Anspruch 1, umfassend:
a. Pyroxsulam;
b. Kaolin;
c. Maleinsäureanhydrid, Polymer mit 2,4,4-Trimethylpenten, Natriumsalz, auch bekannt als CAS 37199-81-8;
d. N-Methyloleoyltaurat;
e. POLYFON^{®} F, auch bekannt als CAS 8061-51-6;
f. PERGOPAK^{®} M, auch bekannt als CAS 9011-05-6; und
g. Cloquintocet-mexyl.

## Revendications

1. Composition herbicide comprenant :
a) au moins un herbicide,
b) au moins un support,
c) au moins un polycarboxylate,
d) au moins un taurate,
e) au moins un lignosulfonate,
f) au moins un polymère de polycondensation urée-formaldéhyde,
g) et du cloquintocet-mexyl,
dans laquelle le support au nombre d'au moins un est choisi parmi les suivants : calcite, talc, kaolin, argile de type pyrophyllite, silice, argile de type attapulgite, kieselguhr, craie, terre à diatomées, chaux, carbonate de calcium, argile de type bentonite, terre à foulon, coques de graines de coton, farine de blé, farine de soja, pierre ponce, poudre de bois, poudre de coque de noix, lignine, montmorillonite et attapulgite.

2. Composition herbicide conforme à la revendication 1, dans laquelle
- le polycarboxylate au nombre d'au moins un est un sel de métal alcalin de poly(acide acrylique) ou de poly(acide méthacrylique),
- le taurate au nombre d'au moins un est un sel de métal alcalin d'un amide d'acide gras et de taurine ou de N-méthyl-taurine,
- le lignosulfonate au nombre d'au moins un est neutralisé avec un métal alcalin et contient de 0,7 à 3,3 moles d'ion sulfonate par kilogramme, les groupes acide sulfonique initiaux étant placés sur des chaînes latérales, sur des cycles aromatiques ou sur une combinaison de ces deux types de sites,
- et le polymère de polycondensation urée-formaldéhyde au nombre d'au moins un comporte environ 0,6 % de groupes méthylol réactifs et présente une teneur en eau valant de 15 % à 70 %.

3. Composition conforme à la revendication 1, dans laquelle au moins un herbicide est le pyroxsulame.

4. Composition conforme à la revendication 3, dans laquelle au moins un support est du kaolin.

5. Composition conforme à la revendication 4, dans laquelle au moins un polycarboxylate est un sel de sodium d'un copolymère d'anhydride maléique et de 2,4,4-triméthyl-pentène, connu aussi comme étant le « CAS 37199-81-8 ».

6. Composition conforme à la revendication 5, dans laquelle au moins un taurate est du méthyl-oléoyl-taurate de sodium, connu aussi comme étant le « CAS 137-20-2 ».

7. Composition conforme à la revendication 6, dans laquelle au moins un lignosulfonate est un lignosulfonate de sodium présentant une masse molaire d'environ 2900 g/mol, connu aussi comme étant le « CAS 8061-51-6 ».

8. Composition conforme à la revendication 7, dans laquelle au moins un polymère de polycondensation urée-formaldéhyde est un polymère de polycondensation urée-formaldéhyde, connu aussi comme étant le « CAS 68611-64-3 ».

9. Procédé comprenant le fait de mélanger :
a) au moins un herbicide,
b) au moins un support,
c) au moins un polycarboxylate,
d) au moins un taurate,
e) au moins un lignosulfonate,
f) au moins un polymère de polycondensation urée-formaldéhyde,
g) et du cloquintocet-mexyl,
dans laquelle le support au nombre d'au moins un est choisi parmi les suivants : calcite, talc, kaolin, argile de type pyrophyllite, silice, argile de type attapulgite, kieselguhr, craie, terre à diatomées, chaux, carbonate de calcium, argile de type bentonite, terre à foulon, coques de graines de coton, farine de blé, farine de soja, pierre ponce, poudre de bois, poudre de coque de noix, lignine, montmorillonite et attapulgite.

10. Procédé de lutte contre les mauvaises herbes ou les graminées, ou les deux, dans des cultures de végétaux utiles, lequel procédé comporte le fait de traiter lesdites cultures, ou la zone où ces cultures doivent être plantées, avec une quantité efficace d'une composition herbicide conforme à la revendication 1.

11. Composition herbicide conforme à la revendication 1, qui comprend :
a) du pyroxsulame,
b) du kaolin,
c) du sel de sodium d'un copolymère d'anhydride maléique et de 2,4,4-triméthyl-pentène, connu aussi comme étant le « CAS 37199-81-8 »,
d) un N-méthyl-oléoyl-taurate,
e) du Polyfon^{®} F, connu aussi comme étant le « CAS 8061-51-6 »,
f) du Pergopak^{®} M, connu aussi comme étant le « CAS 9011-05-6 »,
g) et du cloquintocet-mexyl.
